# EUROPEAN PATENT SPECIFICATION

(11) **EP 3 562 642 B1**
(45) Date of publication and mention of the grant of the patent: **15.07.2020**
(21) Application number: 18724068.4
(22) Date of filing: 25.04.2018
(51) Int. Cl.: B29C 45/27, B29C 45/34

(54) **DOUBLE SEAL VALVE PIN TIP WITH VENT**
DOPPELT GEDICHTETE VENTILNADELSPITZE MIT ENTLÜFTUNG
POINTE DE TIGE DE SOUPAPE À DOUBLE JOINT POURVUE D'UN ÉVENT

(30) Priority: 26.04.2017 US 201762490078 P
(43) Date of publication of application: 06.11.2019
(73) Proprietor: Synventive Molding Solutions, Inc., Peabody, MA 01960 (US)
(72) Inventor: LIQIAO, Li, SuZhou 1506 (CN)
(74) Representative: Fuchs Patentanwälte Partnerschaft mbB
(86) International application number: PCT/US2018/029338
(87) International publication number: WO 2018/200660

(56) References cited:
- CA-A1- 2 358 187
- US-A1- 2003 082 263
- US-A1- 2003 180 412
- US-A1- 2014 248 385

## Description

### BACKGROUND OF THE INVENTION

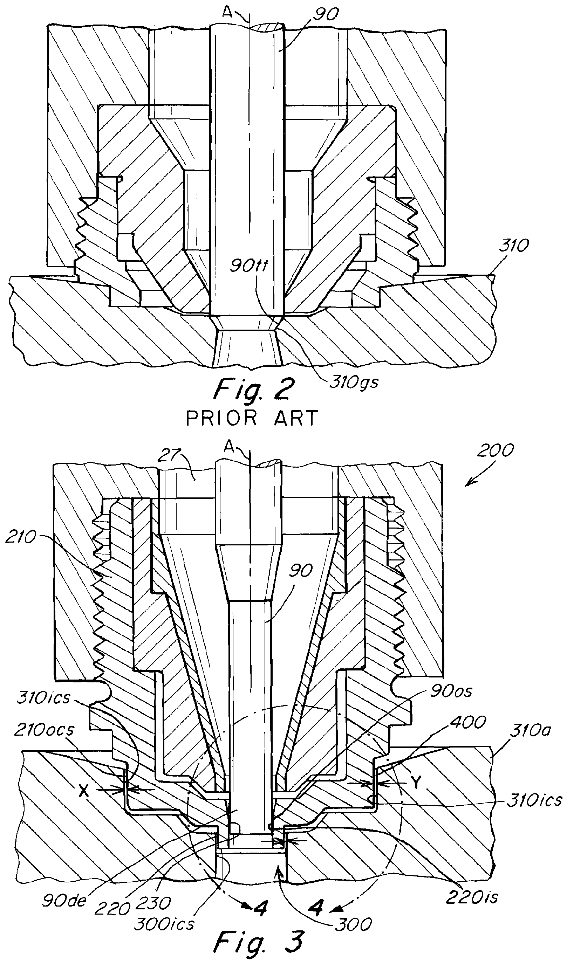

Injection molding systems having nozzle inserts and configurations that form circumferential gaps and pockets with the flow channel of the nozzle that do not provide a fluid seal or air venting have been used in systems such as shown in U.S. Publication No. 2014/0248385, U.S. Publication No. 2003/0180412, PCT/US15/10270 and PCT/US2016/022452. Such prior art systems typically use a valve pin 80 having a distal tip end surface that is tapered and driven into forcible engagement with a surface of a mold body 310gs, Fig. 2, for purposes of closing off a gate 300 in order to stop flow of injection fluid at the beginning and end of an injection cycle.

### SUMMARY OF THE INVENTION

In accordance with the invention there is provided an assembly (200) in accordance with appended claim 1.

In another aspect of the invention there is provided a method of performing an injection molding cycle in accordance with appended claim 10.

The appended dependent claims specify further embodiments of the invention.

### BRIEF DESCRIPTION OF THE DRAWINGS

Fig. 1 is a cross-sectional view of an injection molding machine, hotrunner or heated manifold, nozzle, mold body and nozzle with conventional nozzle tip, tapered valve pin and complementary mold aperture that mates with the tapered tip end of the valve pin.
Fig. 2 is an enlarged fragmentary view of the tip of the nozzle and complementary mold aperture components of the Fig. 1 system.
Fig. 3 is a view similar to Fig. 2 showing a nozzle with distal end nozzle inserts and valve pin configurations according one embodiment of the invention.
Fig. 4 is an enlarged detail view of the area enclosed by arrows 4-4 of Fig. 3.
Fig. 5 is a cross sectional plan view taken along lines 5-5 of Fig. 4.
Fig. 6 is an exploded perspective view of the Figs. 4, 5 components.
Fig. 7A is sectional view similar to Fig. 4 showing additional components including the mold components and showing the distal end of a cylindrically configured valve pin in a gate closed disposition or position.
Fig. 7B is a section view similar to Fig. 7A showing the valve pin in a gate open upstream position.
Fig. 8 is a sectional schematic view of a pair of nozzles gated to a single mold cavity, the nozzles having a configuration similar to the nozzles of Figs. 4 and 7A, 7B and being arranged in a sequential valve gate configuration where one nozzle is selected to be first opened during the course of an injection and the other downstream nozzle is initially closed and later opened after injection fluid travels from the exit of the first nozzle through the mold cavity past the exit of the other downstream nozzle.

### DETAILED DESCRIPTION

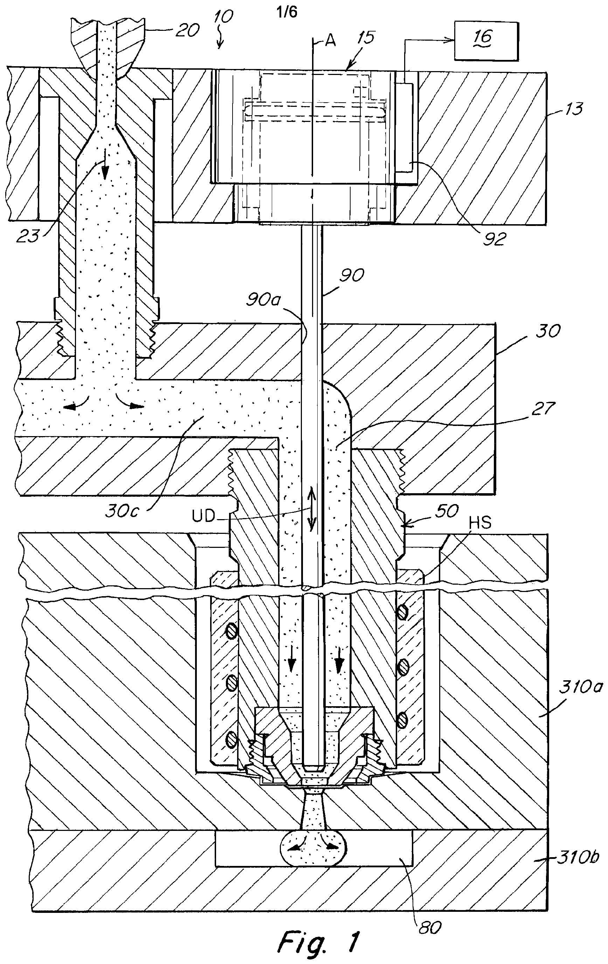

Fig. 1 shows an injection molding system 10 comprised of a top clamp plate 13, an actuator 15 that reciprocally drives an interconnected valve pin 90 in an upstream-downstream path UD between gate open and gate closed positions as shown in Figs. 3A, 3B. The valve pin 90 is preferably arranged such that the valve pin is mounted within a guide aperture 90a that extends through a hotrunner or heated manifold 30 and further extends through a fluid material 23 flow channel 30c that is disposed within the heated manifold 30. The nozzle 50 sealably interconnects the manifold flow channel 30c with a central nozzle flow channel 27. The apparatus 10 typically includes a controller 16 that controls the upstream-downstream UD movement of the valve pin 90 during the course of an injection cycle according to a predetermined algorithm or program that receives a signal indicative of axial position of the valve pin 90 from a position sensor 92, the algorithm or program using the position signal to instruct the actuator to controllably drive the valve pin to any desired one or more axial positions during the course of an injection cycle.

As shown in Fig. 1, a heating device such as a controllably heatable electrical coil mechanism is mounted around the outer circumferential surface of the nozzle body 50 of a valve 200.

The injection machine 20 injects fluid material 23 under pressure in a downstream direction D into the fluid distribution channels 30d of the heated manifold 30. The fluid material 23 is routed further downstream through downstream manifold channel 30c and further downstream into and through the nozzle channel 27 eventually to and through the central bore 230 of the nozzle tip 210 and further downstream through the cavity entrance aperture or gate 300 into mold cavity 80. As described below, some portion of the fluid material 23 travelling downstream through nozzle channel is routed through lateral nozzle apertures 50 and gaps X, Y, Z during the course of downstream flow to and through the gate 300.

The apparatus 10 includes a mold body 310a, 310b that forms a cavity 80 the fluid flow entrance to which is aperture or gate 300 with which the travel or drive axis A of the nozzle 50 and valve pin 90 is typically coaxially aligned.

As shown in Fig. 2, the apparatus 10 includes a nozzle assembly (200) that routs the injection fluid material (23) to the mold cavity (80). The nozzle assembly (200) comprises a nozzle tip (210) disposed and typically screwably attached to or at the distalmost end of the nozzle body 50. The assembly comprises a distal projection (220) having a downstream central bore (230) that communicates with the upstream fluid delivery channel (27). The central bore 230 has an inner surface (230is) adapted to slidably receive a complementary in shape outer surface (90os) of a distal end (90de) of the valve pin (90).

The cavity entrance aperture (300) is formed to have an inner circumferential surface (300ics) having a circumferential size that can receive the distal projection 220. The cavity entrance aperture (300) acts as a fluid flow passage or gate into the mold cavity (80) for injection fluid 23 flowing downstream through the main nozzle flow channel 27. The distal nozzle tip 210 is typically fixedly or stationarily mounted or attached to the nozzle body 50 which in turn is stationarily or fixedly attached or mounted to the manifold 30 which in turn is fixedly or stationarily mounted relative to the mold 310a, 310b resulting in the distal projection 220 being mounted or disposed in a stationary position within the cavity entrance aperture 300 such that an outer circumferential surface 220ocs of the distal projection 220 abuts, faces or is adjacent the inner circumferential surface (300ics) of the cavity entrance aperture (300).

The outer circumferential surface 220ocs and the inner circumferential surface 300ics are configured to form an air gap Z between the outer circumferential surface 220ocs and the inner circumferential surface 300ics of a size sufficient to enable air to travel upstream AU1 through the gap Z upon mounting of the distal projection 220 within the cavity entrance aperture 300 and downstream movement D of the distal end 90de of the valve pin 90 through the central bore 230 of the distal projection 220.

The gap (Z) between the outer circumferential surface (220ocs) and the inner circumferential surface 300ics is preferably at least 0.015 mm and typically ranges from about 0.015 mm to about 0.050 mm, more preferably from about 0.015 mm to about 0.025 mm and most preferably from about 0.015 mm to about 0.020 mm.

The nozzle body 50 is mounted relative to the heated manifold 30 such that the fluid delivery channel (27) receives the injection fluid from a fluid distribution channel (30d) of the manifold (30) for delivery downstream through the central bore (230) of the distal projection (220).

The mold body 310a, 310b is configured to have an upstream inner circumferential surface (310ics) that is formed to be of such a size and configuration as to be capable of receiving the distal nozzle tip (210) where the upstream inner circumferential surface 310ics of the mold body and the upstream outer circumferential surface (210ocs) abut, are adjacent to or face each other leaving an air gap X of preferably 0.015 mm or less (typically from about 0.015 mm to about 0.007 mm) between the upstream inner circumferential surface (310ics) and the upstream outer circumferential surface (210ocs).

In an alternative embodiment some portion of the circumferential surface 210ocs of the nozzle insert 210 can be configured as a flat 400 or other recess formed on the surface 210ocs that forms a larger than 0.05 mm gap or space between the surface 210ocs and the inner surface 310ics of the mold body 310a such that air can more readily vent upstream through an enlarged space or vent Y greater than 0.025 mm.

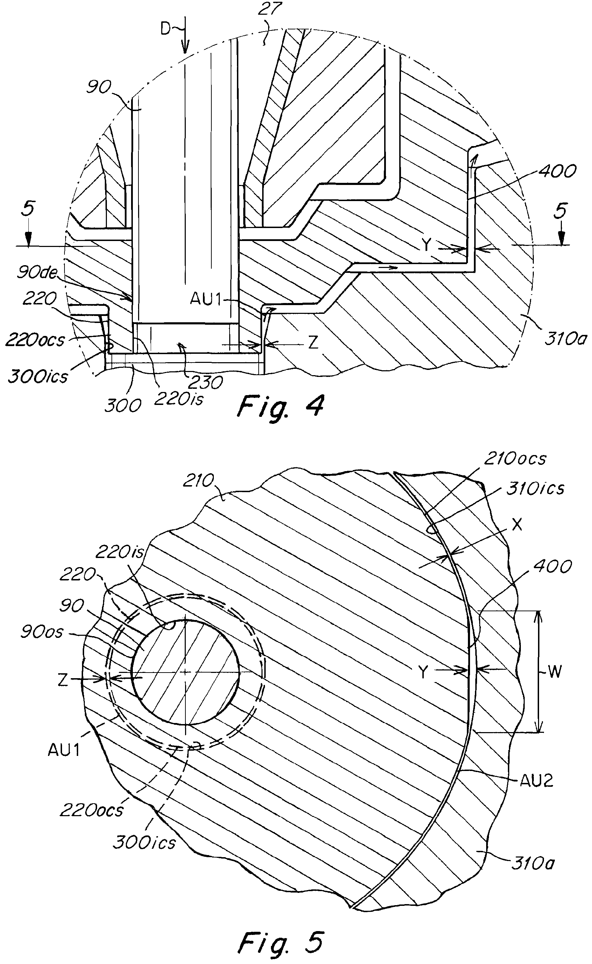

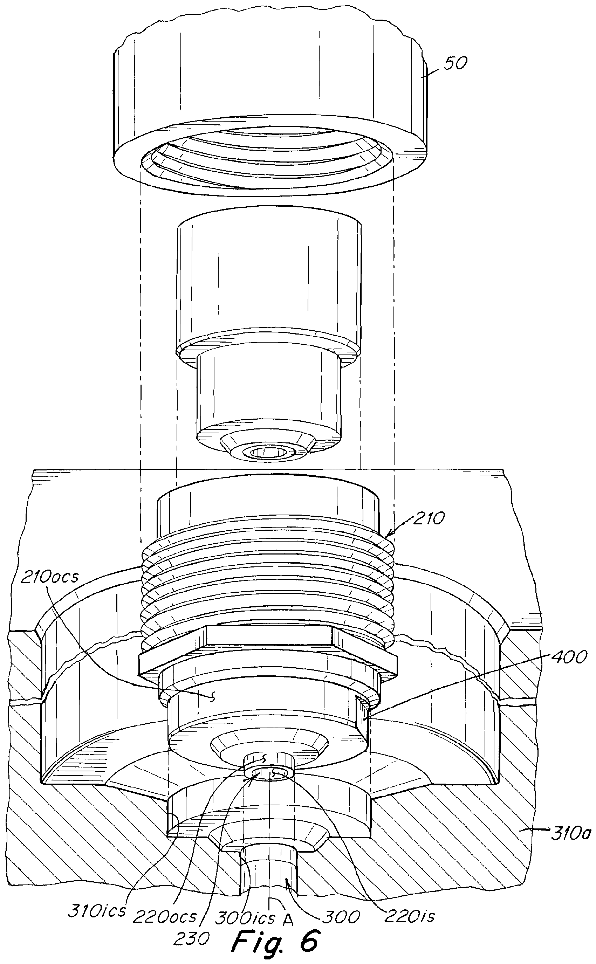

As shown in Figs. 3-6, the flat or recess 400 has a width W which is typically a relatively small portion of the overall circumference of the outer circumferential surface 210ocs.

As shown in Figs. 3-6 the distal nozzle tip (210) comprises a distal projection (220) having an outer circumferential surface (220ocs) and an inner surface (220is) adapted to slidably receive and engage the outer circumferential surface 90os of the distal end (90de) of the valve pin (90) such that fluid flow 23 through the passage 230 and gate 300 can be stopped.

The mold (310a, 310b) is formed to include an upstream inner circumferential surface (310ics) for receiving an upstream outer circumferential surface (210ocs) of the distal nozzle tip (210). The nozzle tip 210 is mounted and arranged to form a gap (X) having a width sufficient to enable air or gas to flow upstream (AU2) through the gap (X) upon downstream movement (D) of the distal end (90de) of the valve pin (90) through the central bore (230) of the distal projection (220). The size or width of the gap (X) preferably is selected to prevent flow of injection fluid upstream (AU2) through the gap (X).

Similarly, the size or width of the gap (Z) is selected to prevent flow of injection fluid upstream (AU1) through the gap (Z). As shown, the outer circumferential surface (90os) and the complementary inner surface (220is) of the distal end projection are generally cylindrical in configuration.

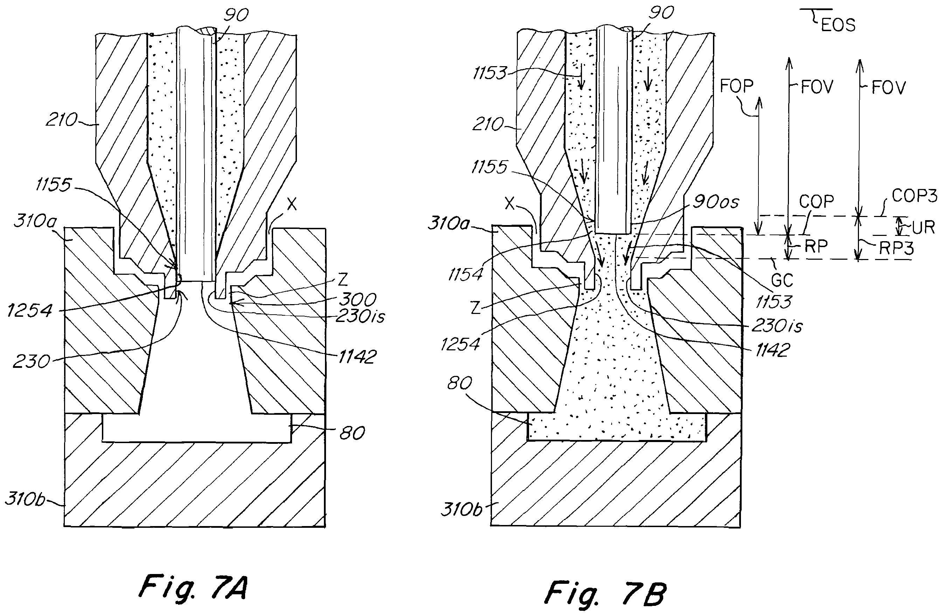

The valve pin 90 is typically controllably drivable by the actuator 15 and the controller 16 upstream and downstream UD along the axis A between a first start of injection cycle closed position, Fig. 7A where the tip end 1142 of the valve pin 90 obstructs the gate 300 to prevent the injection fluid 23 from flowing into the cavity 80 and a full open position, Fig. 7B, where the injection fluid material flows freely without restriction from the tip end 1142 of the pin 90 through the gate at a maximum pressure, the pressure of the injection fluid associated with the nozzle varying between zero at the beginning of the injection cycle when the valve pin 90 is in the first closed position and the maximum pressure.

The controller 16 typically includes instructions that instruct the actuator 15 to controllably drive the axial UD position of the valve pin 90 between one or more selected positions that vary the pressure or rate of flow of the injection fluid 23 through the gate 300.

The controller 16 can include a set of instructions that instruct the actuator to controllably drive the valve pin to be disposed or held in a position intermediate the closed position and the full open position for a selected period of time during the course of an injection cycle such that the pressure or rate of flow of the injection fluid 23 is held at a single selected reduced pressure relative to the maximum pressure for the selected period of time.

Alternatively the controller 16 can include a set of instructions that instruct the

Figs. 7A, 7B show a system where the valve pin 90 has a cylindrically configured tip end 1155, the tips end of the pin 90 can be positioned at various times and positions between a starting closed position as in Fig. 7A and various upstream opened positions, RP wherein RP represents a path of selectable length over the course of which the velocity of upstream withdrawal of the pin 90 from the gate closed position Fig. 7A to an open position is reduced via a controllable flow restrictor or electric actuator) relative to a maximum velocity of upstream movement that the valve pin would normally have over the uncontrolled velocity path FOV when the hydraulic pressure or electric actuator speed is normally at full pressure or electric power and pin velocity is at its maximum. Thus, the controller 16 can be programmed to drive the valve pin 90 at reduced velocity over any portion or all of the stroke length or travel path of the pin 90 upstream or downstream as well as over any portion or all of the duration of the injection cycle. Thus, the controller 16 can be programmed to drive the valve pin 90 upstream beginning from a gate closed position, Fig. 7A, at a reduced velocity for a selected period of time or over a select length of travel. Or the controller 16 can included instructions that instruct the valve pin to be driven at a reduced velocity relative to maximum when being driven downstream beginning from a fully unrestricted intermediate gate open position COP2, Fig. 7B, or from a maximum upstream position EOS downstream toward and to the gate closed position, Fig. 7A.

The outer surface 90os of the tip end 1155 of the valve pin 90 and the interior surface 230is of the bore 230 can be configured or adapted to cooperate with each other to restrict and vary the rate of flow of fluid material 1153, Figs. 3A, 3B over the course of travel of the tip end of the valve pin through the restricted velocity path RP. Most typically as shown in Figs. 7A, 7B, the outside circumferential surface 90os of the tip end 1155 of the pin 90 is cylindrical in configuration and the inner surface 230is has a complementary cylindrical surface 1254 with which the tip end surface 90os mates to close the gate 300 when the pin 90 is in the downstream gate closed position. Thus the outside radial surface 90os of the tip end 1155 of the pin 90 can create a restricted flow channel 1154 over the length of travel of the tip end 1155 through and along restricted flow path RP that restricts or reduces the volume or rate of flow of fluid material 1153 relative to the rate of flow when the pin 90 is at a full gate open position, namely when the tip end 1155 of the pin 90 has travelled to or beyond the length of the restricted flow path RP which can be any selected path and is typically between about 4 mm and 200mm.

In one embodiment, as the tip end 1155 of the pin 90 continues to travel upstream from the gate closed GC position through the length of the RP path, the rate of material fluid flow 1153 through restriction gap 1154 through the bore 230 and gate 300 into the cavity 30 can continue to gradually increase from 0 at gate closed GC position to a maximum flow rate when the tip end 1155 of the pin reaches a position FOP (full open position). In one embodiment at the expiration of the predetermined amount of time when the pin tip 1155 reaches the COP, FOP (full open) position Figs. 7A, 7B, the pin 90 is immediately driven by the hydraulic system at maximum velocity FOV (full open velocity).

In alternative embodiments, when the predetermined time for driving the pin at reduced velocity has expired and the tip 1155 has reached the end of restricted flow path RP2, the tip 1155 may not necessarily be in a position where the fluid flow 1155 is not still being restricted. In such alternative embodiments, the fluid flow 1153 can still be restricted to less than maximum flow when the pin has reached the changeover position COP2 where the pin 90 is driven at a higher, typically maximum, upstream velocity FOV. In the alternative examples shown in Fig. 7B, when the pin has travelled the predetermined path length at reduced velocity and the tip end 1155 has reached the changeover point COP, the tip end 1155 of the pin 90 (and its radial surface 90os) no longer restricts the rate of flow of fluid material 1153 through the gap 1154 because the gap 1154 has increased to a size that no longer restricts injection fluid flow 1153 below the maximum flow rate of flow. Thus in Fig. 7B the maximum fluid flow rate for injection material 1153 is reached at the upstream position COP of the tip end 1142. In another example shown in Fig. 7B the pin 90 can be driven at a reduced velocity over a shorter path RP2 that is less than the entire length of the restricted mold material flow path RP and switched over at the end COP2 of the shorter restricted path RP2 to a higher or maximum velocity FOV.

In another alternative embodiment, shown in Fig. 7B, the pin 90 can be driven and instructed to be driven at reduced or less than maximum velocity over a longer path length RP3 having an upstream portion UR where the flow of injection fluid mold material is not restricted but flows at a maximum rate through the bore 230 and gate 300 for the given injection mold system. In this Fig. 7B example the velocity or drive rate of the pin 90 is not changed over until the tip end of the pin 90 or actuator 15 has reached the changeover position COP3. As in other embodiments, a position sensor 92 senses either that the valve pin 90 or an associated component has travelled the path length RP3 or reached the end COP3 of the selected path length and the controller 16 receives and processes such information and instructs the drive system to drive the pin 90 at a higher, typically maximum velocity upstream. In another alternative embodiment, the pin 90 can be driven at reduced or less than maximum velocity throughout the entirety of the travel path of the pin during an injection cycle from the gate closed position GC up to the end-of-stroke EOS position, the controller 16 being programmed to instruct the drive system for the actuator to be driven at one or more reduced velocities for the time or path length of an entire closed GC to fully open EOS cycle.

The invention includes configurations where a valve pin 90 is driven downstream starting from a fully upstream, gate open position COP, COP2, EOS at one or more reduced downstream velocities over at least the latter portion of the downstream path of travel of the pin toward the gate where the tip end 1155 of the pin 90 restricts flow of the injection fluid through the bore 230 and gate 300 such as shown in Figs. 7A and 7B. Like reduced upstream velocity, reduced downstream velocity drive of a valve pin 90 through particularly through the restricted flow paths RP can serve to lessen the degree of downward force exerted by the distal tip end surface 1142 of the pin 90 on the injection fluid 1153 that is forcibly pushed through the bore 230 and gate 300 and into the cavity 80 when the tip end of the valve pin travels downstream to a position where the distal tip end surface 1142 closes the gate 300 and bore 230. Such reduced force exerted on the injection fluid 1153 at the very end portion of travel RP of the injection cycle at the entrance to the cavity of the mold thus reduces the likelihood of a blemish or artifact being formed on the part that is formed within the cavity at the gate area.

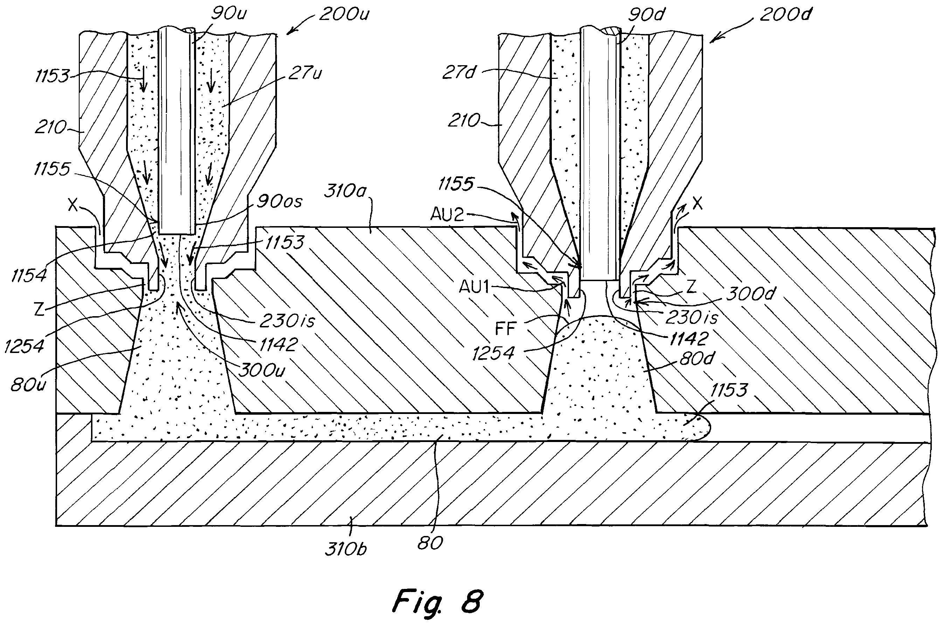

As shown in Fig. 8, nozzle assemblies 200u, 200d can be employed in a sequentially gated arrangement with one assembly 200u being selected as a first valve to inject fluid 1153 into a cavity 80 at a position upstream from a second assembly 200d disposed at a gate position downstream from the gate position of the first assembly 200u. In a typical sequential injection process, the valve pin 90u of the first selected valve 200u is first opened to allow fluid 1153 to flow downstream past the gate position 300d of the downstream valve 200d before the downstream valve pin 90d is opened. Typically as the fluid 1153 flows past the downstream gate 300d a flow front FF of fluid 1153 travels upstream toward the downstream gate 300d forcing air within the cavity 80d to vent through the air gaps Z, X, Y of the downstream valve 200d. Such venting serves to obviate the formation of air pockets and defects in the final molded product. The same sort of venting of air through the Z, X, Y gaps of valve 200u occurs when the valve pin 90u is first opened as a result of air that may reside in either the upstream gate 300u or within the nozzle passage 27u being forced downstream by the downstream movement of the tip end 90de into the gate area 300u. Again, the purging of air through vents Z, X, y minimizes and obviates formation of defects in the molded part or product that is ultimately formed within the cavity 80.

As above described, the size or width of the vent passages Z, X, Y is selected such that injection fluid does not flow upstream through the gaps Z, X, Y.

## Claims

1. An assembly (200) for routing an injection fluid (23) to a mold cavity (80) in an injection molding apparatus (10) comprised of an injection molding machine (20), a heated manifold (30) that receives the injection fluid (23), and a valve pin (90) drivable along an upstream and downstream path of travel (UD) through a fluid delivery channel (27) leading to a cavity (80) of a mold (310a, 310b), comprising:
a distal nozzle tip (210) comprising a distal projection (220) having an outer circumferential surface (220ocs) and a central bore (230) that communicates with the fluid delivery channel (27) and having an inner surface (220is) adapted to receive a distal end (90de) of the valve pin (90),
a mold (310a, 310b) having a cavity entrance aperture (300) forming a gate through which the injection fluid (23) is routed into the cavity (80), the cavity entrance aperture (300) having a downstream inner circumferential surface (300ics),
**characterised by** the distal nozzle tip (210) being mounted such that the distal projection (220) is disposed in a stationary position within the cavity entrance aperture (300) wherein the outer circumferential surface (220ocs) of the distal nozzle tip (210) is disposed adjacent the downstream inner circumferential surface (300ics) forming a gap (Z) having a width sufficient to enable air or gas to flow upstream (AU1) through the gap (Z) upon downstream movement (D) of the distal end (90de) of the valve pin (90) through the central bore (230) of the distal projection (220).

2. An assembly according to claim 1 wherein the mold (310a, 310b) has an upstream inner circumferential surface (310ics) disposed upstream of the downstream inner circumferential surface (300ics) and the distal nozzle tip (210) has an upstream outer circumferential surface (210ocs), the distal nozzle tip (210) being mounted such that the upstream inner circumferential surface (310ics) and the upstream outer circumferential surface (210ocs) are stationarily disposed adjacent to each other forming a gap (X) having a width sufficient to enable air or gas to flow upstream (AU2) through the gap (X) upon downstream movement (D) of the distal end (90de) of the valve pin (90) through the central bore (230) of the distal projection (220).

3. An assembly according to any of the foregoing claims wherein the size or width of the gap (Z) is selected to prevent flow of injection fluid upstream (AU1) through the gap (Z).

4. An assembly according to any of the foregoing claims wherein the size or width of the gap (X) is selected to prevent flow of injection fluid upstream (AU2) through the gap (X).

5. An assembly according to any of the foregoing claims wherein the gap (Z) ranges between about 0.015 mm and about 0.05 mm and the gap (X) ranges between 0.00 and about 0.015 mm.

6. An assembly according to any of the foregoing claims wherein the distal nozzle tip (210) is stationarily mounted to a nozzle body (50) that houses the fluid delivery channel 27, the nozzle body (50) being stationarily mounted relative to the cavity entrance aperture (300) in an arrangement such that the distal projection (220) is stationarily mounted relative to the cavity entrance aperture (300).

7. An assembly (200) according to any of the foregoing claims wherein the distal nozzle tip (210) is mounted relative to the mold (310a, 310b) such that air (AU1, AU2) contained within the cavity (80) or the flow passage (27) is ventable to an air space or ambient air (AS) disposed around the assembly (200).

8. An assembly according to any of the foregoing claims wherein the distal end (90de) of the valve pin 90 has an outer circumferential surface (90os) adapted to be slidably driven into engagement with and along a complementary inner surface (220is) of the distal projection (220) when the pin (80) is driven in the upstream downstream path of travel (UD), injection fluid (23) being prevented from flowing through the central bore (230) when the outer circumferential surface (90os) is engaged with the complementary inner surface (220is).

9. An assembly according to any of the foregoing claims wherein the outer circumferential surface (90os) and the complementary inner surface (220is) are generally cylindrical in configuration.

10. A method of performing an injection molding cycle comprising injecting an injection fluid (23) from an injection molding machine (20) downstream to a heated manifold (30) and further downstream to a fluid delivery channel (27) of a nozzle body (50),
mounting a distal nozzle tip (210) to the nozzle body (50), the distal nozzle tip (27) comprising a distal projection (220) having a central bore (230) communicating with the fluid delivery channel (27) and having an inner surface (230is) adapted to slidably receive and engage an outer surface (90os) of a distal end (90de) of the valve pin (90),
mounting the distal nozzle tip (210) to a mold (310a, 310b) having a cavity entrance aperture (300) having an inner circumferential surface (300ics), the cavity entrance aperture (300) forming a fluid flow gate into the mold cavity (80),
**characterized in that** the method includes:
mounting the nozzle body (50) in an arrangement such that the distal projection (220) is disposed in a stationary position within the cavity entrance aperture (300) such that an outer circumferential surface (220ocs) of the distal projection (220) forms a gap (Z) having a size or width sufficient to enable air or gas to flow upstream (AU1) through the gap (Z) upon downstream movement (D) of the distal end (90de) of the valve pin (90) through the central bore (230) of the distal projection (220).

11. The method of claim 10 wherein the mold (310a, 310b) has an upstream inner circumferential surface (310ics) and the distal nozzle tip (210) has an upstream outer circumferential surface (210ocs), the method further comprising:
mounting the nozzle body (50) such that the upstream inner circumferential surface (310ics) and the upstream outer circumferential surface (210ocs) are stationarily disposed adjacent to each other forming a gap (X) having a width sufficient to enable air or gas to flow upstream (AU2) through the gap (X) upon downstream movement (D) of the distal end (90de) of the valve pin (90) through the central bore (230) of the distal projection (220).

## Patentansprüche

1. Anordnung (200) zum Leiten eines Spritzgießfluids (23) zu einem Formhohlraum (80) in einer Spritzgießvorrichtung (10), die aus einer Spritzgießmaschine (20), einem geheizten Verteiler (30), der das Spritzgießfluid (23) empfängt, und einem Ventilstift (90) besteht, der entlang eines Stromaufwärts-Stromabwärts-Verfahrweges (UD) durch einen Fluidzufuhrkanal (27) antreibbar ist, der zu einem Hohlraum (80) einer Form (310a, 310b) führt, mit:
einer distalen Düsenspitze (210), die einen distalen Vorsprung (220) mit einer Außenumfangsfläche (220ocs), einer mit dem Fluidzufuhrkanal (27) kommunizierenden Mittenöffnung (230) und einer Innenfläche (220is) aufweist, die dazu eingerichtet ist, ein distales Ende (90de) des Ventilstifts (90) aufzunehmen;
einer Form (310a, 310b) mit einer Hohlraumeintrittsöffnung (300), die einen Angusskanal bildet, über den das Spritzgießfluid (23) in den Hohlraum (80) geleitet wird, wobei die Hohlraumeintrittsöffnung (300) eine stromabwärtsseitige Innenumfangsfläche (300ics) aufweist;
**dadurch gekennzeichnet, dass**
die distale Düsenspitze (210) derart montiert ist, dass der distale Vorsprung (220) in einer stationären Position innerhalb der Hohlraumeintrittsöffnung (300) angeordnet ist, wobei die Außenumfangsfläche (220ocs) der distalen Düsenspitze (210) benachbart zur stromabwärtsseitigen Innenumfangsfläche (300ics) angeordnet ist, wobei ein Spalt (Z) mit einer Breite gebildet wird, die ausreicht, um zu ermöglichen, dass bei einer stromabwärtsseitigen Bewegung (D) des distalen Endes (90de) des Ventilstifts (90) durch die Mittenöffnung (230) des distalen Vorsprungs (220) Luft oder Gas stromaufwärts (AU1) durch den Spalt (Z) strömt.

2. Anordnung nach Anspruch 1, wobei die Form (310a, 310b) eine stromaufwärtsseitige Innenumfangsfläche (310ics) aufweist, die stromaufwärts von der stromabwärtsseitigen Innenumfangsfläche (300ics) angeordnet ist, und die distale Düsenspitze (210) eine stromaufwärtsseitige Außenumfangsfläche (210ocs) aufweist, wobei die distale Düsenspitze (210) derart montiert ist, dass die stromaufwärtsseitige Innenumfangsfläche (310ics) und die stromaufwärtsseitige Außenumfangsfläche (210ocs) stationär benachbart zueinander angeordnet sind, wobei ein Spalt (X) mit einer Breite gebildet wird, die ausreicht, um zu veranlassen, dass bei einer stromabwärtsseitigen Bewegung (D) des distalen Endes (90de) des Ventilstifts (90) durch die Mittenöffnung (230) des distalen Vorsprungs (220) Luft oder Gas stromaufwärts (AU2) durch den Spalt (X) strömt.

3. Anordnung nach einem der vorstehenden Ansprüche, wobei die Größe oder die Breite des Spalts (Z) derart ausgewählt ist, dass ein Fluss des Spritzgießfluids stromaufwärts (AU1) durch den Spalt (Z) verhindert wird.

4. Anordnung nach einem der vorstehenden Ansprüche, wobei die Größe oder die Breite des Spalts (X) derart ausgewählt sind, dass ein Fluss des Spritzgießfluids stromaufwärts (AU2) durch den Spalt (X) verhindert wird.

5. Anordnung nach einem der vorstehenden Ansprüche, wobei der Spalt (Z) zwischen etwa 0,015 mm und etwa 0,05 mm beträgt und der Spalt (X) zwischen 0,00 mm und etwa 0,015 mm beträgt.

6. Anordnung nach einem der vorstehenden Ansprüche, wobei die distale Düsenspitze (210) an einem Düsenkörper (50) stationär montiert ist, der den Fluidzufuhrkanal (27) aufnimmt, wobei der Düsenkörper (50) relativ zur Hohlraumeintrittsöffnung (300) in einer derartigen Anordnung stationär montiert ist, dass der distale Vorsprung (220) relativ zur Hohlraumeintrittsöffnung (300) stationär montiert ist.

7. Anordnung (200) nach einem der vorstehenden Ansprüche, wobei die distale Düsenspitze (210) relativ zur Form (310a, 310b) derart montiert ist, dass in dem Hohlraum (80) oder im Strömungskanal (27) enthaltene Luft (AU1, AU2) zu einem Luftraum oder an die Umgebungsluft (AS) abgelassen werden kann, der/die sich um die Anordnung (200) herum befindet.

8. Anordnung nach einem der vorstehenden Ansprüche, wobei das distale Ende (90de) des Ventilstifts (90) eine Außenumfangsfläche (90os) aufweist, die dazu eingerichtet ist, in Eingriff mit und entlang einer komplementären Innenfläche (220is) des distalen Vorsprungs (220) gleitend angetrieben zu werden, wenn der Stift (80) auf dem Stromaufwärts-Stromabwärts-Verfahrweg (UD) angetrieben wird, wobei verhindert wird, dass Spritzgießfluid (23) durch die Mittenöffnung (230) fließt, wenn die Außenumfangsfläche (90os) mit der komplementären Innenfläche (220is) in Eingriff steht.

9. Anordnung nach einem der vorstehenden Ansprüche, wobei die Außenumfangsfläche (90os) und die komplementäre Innenfläche (220is) allgemein eine zylindrische Konfiguration aufweisen.

10. Verfahren zum Ausführen eines Spritzgießzyklus, mit dem Einspritzen eines Spritzgießfluids (23) von einer Spritzgießmaschine (20) stromabwärts zu einem geheizten Verteiler (30) und weiter stromabwärts zu einem Fluidzufuhrkanal (27) eines Düsenkörpers (50);
Montieren einer distalen Düsenspitze (210) am Düsenkörper (50), wobei die distale Düsenspitze (27) einen distalen Vorsprung (220) mit einer mit dem Fluidzufuhrkanal (27) kommunizierenden Mittenöffnung (230) und einer Innenfläche (230is) aufweist, die dazu eingerichtet ist, eine Außenfläche (900s) eines distalen Endes (90de) des Ventilstifts (90) gleitend aufzunehmen und damit in Eingriff zu kommen,
Montieren der distalen Düsenspitze (210) an einer Form (310a, 310b) mit einer Hohlraumeintrittsöffnung (300) mit einer Innenumfangsfläche (300ics), wobei die Hohlraumeintrittsöffnung (300) einen Fluidströmungsangusskanal in den Formhohlraum (80) bildet;
**dadurch gekennzeichnet, dass** das Verfahren ferner die Schritte aufweist:
Montieren des Düsenkörpers (50) in einer derartigen Anordnung, dass der distale Vorsprung (220) in einer stationären Position innerhalb der Hohlraumeintrittsöffnung (300) angeordnet ist, so dass eine Außenumfangsfläche (220ocs) des distalen Vorsprungs (220) einen Spalt (Z) mit einer Größe oder Breite bildet, die ausreichend ist, um zu ermöglichen, dass bei einer stromabwärtsseitigen Bewegung (D) des distalen Endes (90de) des Ventilstifts (90) durch die Mittenöffnung (230) des distalen Vorsprungs (220) Luft oder Gas stromaufwärts (AU1) durch den Spalt (Z) strömt.

11. Verfahren nach Anspruch 10, wobei die Form (310a, 310b) eine stromaufwärtsseitige Innenumfangsfläche (310ics) aufweist und die distale Düsenspitze (210) eine stromaufwärtsseitige Außenumfangsfläche (210ocs) aufweist, wobei das Verfahren ferner die Schritte aufweist:
Montieren des Düsenkörpers (50) derart, dass die stromaufwärtsseitige Innenumfangsfläche (310ics) und die stromaufwärtsseitige Außenumfangsfläche (210ocs) stationär benachbart zueinander angeordnet sind, wobei ein Spalt (X) mit einer Breite gebildet wird, die ausreichend ist, um zu ermöglichen, dass bei einer stromabwärtsseitigen Bewegung (D) des distalen Endes (90de) des Ventilstifts (90) durch die Mittenöffnung (230) des distalen Vorsprungs (220) Luft oder Gas stromaufwärtsseitig (AU2) durch den Spalt (X) strömt.

## Revendications

1. Ensemble (200) pour acheminer un fluide d'injection (23) vers une cavité de moule (80) dans un appareil de moulage par injection (10) constitué d'une machine de moulage par injection (20), d'un collecteur chauffé (30) qui reçoit le fluide d'injection (23), et d'une tige de vanne (90) pouvant être entraînée le long d'un trajet de déplacement amont et aval (UD) à travers un canal de distribution de fluide (27) menant à une cavité (80) d'un moule (310a, 310b), comprenant :
une pointe de buse distale (210) comprenant une saillie distale (220) ayant une surface circonférentielle extérieure (220ocs) et un trou central (230) qui communique avec le canal de distribution de fluide (27) et ayant une surface intérieure (220is) adaptée pour recevoir une extrémité distale (90de) de la tige de vanne (90),
un moule (310a, 310b) ayant une ouverture d'entrée de cavité (300) formant une porte à travers laquelle le fluide d'injection (23) est acheminé dans la cavité (80), l'ouverture d'entrée de cavité (300) ayant une surface circonférentielle intérieure aval (300ics),
**caractérisé en ce que**
la pointe de buse distale (210) est montée de telle sorte que la saillie distale (220) est disposée dans une position stationnaire à l'intérieur de l'ouverture d'entrée de cavité (300) dans laquelle la surface circonférentielle extérieure (220ocs) de la pointe de buse distale (210) est disposée à proximité adjacente de la surface circonférentielle intérieure aval (300ics) en formant un espace (Z) ayant une largeur suffisante pour permettre à de l'air ou du gaz de s'écouler en amont (AU1) à travers l'espace (Z) lors d'un mouvement en aval (D) de l'extrémité distale (90de) de la tige de vanne (90) à travers le trou central (230) de la saillie distale (220).

2. Ensemble selon la revendication 1, dans lequel le moule (310a, 310b) a une surface circonférentielle intérieure amont (310ics) disposée en amont de la surface circonférentielle intérieure aval (300ics) et la pointe de buse distale (210) a une surface circonférentielle extérieure amont (210ocs), la pointe de buse distale (210) étant montée de telle sorte que la surface circonférentielle intérieure amont (310ics) et la surface circonférentielle extérieure amont (210ocs) sont disposées de manière stationnaire à proximité adjacente l'une de l'autre en formant un espace (X) ayant une largeur suffisante pour permettre à de l'air ou du gaz de s'écouler en amont (AU2) à travers l'espace (X) lors d'un mouvement en aval (D) de l'extrémité distale (90de) de la tige de vanne (90) à travers le trou central (230) de la saillie distale (220).

3. Ensemble selon l'une quelconque des revendications précédentes, dans lequel la taille ou la largeur de l'espace (Z) est choisie pour empêcher un écoulement de fluide d'injection en amont (AU1) à travers l'espace (Z).

4. Ensemble selon l'une quelconque des revendications précédentes, dans lequel la taille ou la largeur de l'espace (X) est choisie pour empêcher un écoulement de fluide d'injection en amont (AU2) à travers l'espace (X).

5. Ensemble selon l'une quelconque des revendications précédentes, dans lequel l'espace (Z) est compris entre environ 0,015 mm et environ 0,05 mm et l'espace (X) est compris entre 0,00 et environ 0,015 mm.

6. Ensemble selon l'une quelconque des revendications précédentes, dans lequel la pointe de buse distale (210) est montée de manière stationnaire sur un corps de buse (50) qui abrite le canal de distribution de fluide (27), le corps de buse (50) étant monté de manière stationnaire par rapport à l'ouverture d'entrée de cavité (300) dans un agencement tel que la saillie distale (220) est montée de manière stationnaire par rapport à l'ouverture d'entrée de cavité (300).

7. Ensemble (200) selon l'une quelconque des revendications précédentes, dans lequel la pointe de buse distale (210) est montée par rapport au moule (310a, 310b) de telle sorte que de l'air (AU1, AU2) contenu dans la cavité (80) ou le passage d'écoulement (27) peut être ventilé vers un espace d'air ou de l'air ambiant (AS) disposé autour de l'ensemble (200).

8. Ensemble selon l'une quelconque des revendications précédentes, dans lequel l'extrémité distale (90de) de la tige de vanne (90) a une surface circonférentielle extérieure (90os) adaptée pour être entraînée de manière coulissante en prise avec et le long d'une surface intérieure complémentaire (220is) de la saillie distale (220) lorsque la tige (80) est entraînée dans le trajet de déplacement amont et aval (UD), le fluide d'injection (23) étant empêché de s'écouler à travers le trou central (230) lorsque la surface circonférentielle extérieure (90os) est en prise avec la surface intérieure complémentaire (220is).

9. Ensemble selon l'une quelconque des revendications précédentes, dans lequel la surface circonférentielle extérieure (90os) et la surface intérieure complémentaire (220is) ont une configuration généralement cylindrique.

10. Procédé pour effectuer un cycle de moulage par injection comprenant l'injection d'un fluide d'injection (23) à partir d'une machine de moulage par injection (20) en aval vers un collecteur chauffé (30) et davantage en aval vers un canal de distribution de fluide (27) d'un corps de buse (50),
le montage d'une pointe de buse distale (210) sur le corps de buse (50), la pointe de buse distale (27) comprenant une saillie distale (220) ayant un trou central (230) communiquant avec le canal de distribution de fluide (27) et ayant une surface intérieure (230is) adaptée pour recevoir de manière coulissante et mettre en prise une surface extérieure (90os) d'une extrémité distale (90de) de la tige de vanne (90),
le montage de la pointe de buse distale (210) sur un moule (310a, 310b) ayant une ouverture d'entrée de cavité (300) ayant une surface circonférentielle intérieure (300ics), l'ouverture d'entrée de cavité (300) formant une porte d'écoulement de fluide dans la cavité de moule (80),
**caractérisé en ce que** le procédé inclut :
le montage du corps de buse (50) dans un agencement tel que la saillie distale (220) est disposée dans une position stationnaire à l'intérieur de l'ouverture d'entrée de cavité (300) de telle sorte qu'une surface circonférentielle extérieure (220ocs) de la saillie distale (220) forme un espace (Z) ayant une taille ou une largeur suffisante pour permettre à de l'air ou du gaz de s'écouler en amont (AU1) à travers l'espace (Z) lors d'un mouvement en aval (D) de l'extrémité distale (90de) de la tige de vanne (90) à travers le trou central (230) de la saillie distale (220).

11. Procédé selon la revendication 10, dans lequel le moule (310a, 310b) a une surface circonférentielle intérieure amont (310ics) et la pointe de buse distale (210) a une surface circonférentielle extérieure amont (210ocs), le procédé comprenant en outre :
le montage du corps de buse (50) de telle sorte que la surface circonférentielle intérieure amont (310ics) et la surface circonférentielle extérieure amont (210ocs) sont disposées de manière stationnaire à proximité adjacente l'une de l'autre en formant un espace (X) ayant une largeur suffisante pour permettre à de l'air ou du gaz de s'écouler en amont (AU2) à travers l'espace (X) lors d'un mouvement en aval (D) de l'extrémité distale (90de) de la tige de vanne (90) à travers le trou central (230) de la saillie distale (220).
